# EUROPEAN PATENT APPLICATION

(11) **EP 4 071 564 A1**
(43) Date of publication of application: **12.10.2022**
(21) Application number: 21167453.6
(22) Date of filing: 08.04.2021
(51) Int. Cl.: G05B 15/02, G05B 19/042

(54) **METHOD AND SYSTEM FOR COMMISSIONING AN HVAC SYSTEM**

(71) Applicant: Viessmann Climate Solutions SE, 35108 Allendorf (Eder) (DE)
(72) Inventor: LOIDOL, Lukas, Kitchener, Ontario N2G 4Z9 (CA); KURMUSH, Samer, Waterloo, Ontario N2K 4N3 (CA); PELLETIER, Stephen, Hope Valley, RI Rhode Island 02832 (US)
(74) Representative: MERH-IP Matias Erny Reichl Hoffmann Patentanwälte PartG mbB

(57) **Abstract**

A method for configuring and commissioning an HVAC system, comprising generating, by a computing device, a configuration file for commissioning the HVAC system such that the HVAC system is brought into operation, wherein the configuration file is generated at a configuration site and the HVAC system is to be delivered to an operation site (S11); uploading, by the computing device, the generated configuration file to a central storage unit (S12); downloading, by a mobile device, the uploaded configuration file from the central storage unit (S13); transmitting, by the mobile device, the downloaded configuration file to an HVAC control unit comprised in the HVAC system located at the operation site (S14); and commissioning, by the HVAC control unit, the HVAC system located at the operation site with the transmitted configuration file (S15).

## Description

### TECHNICAL FIELD OF THE INVENTION

The present invention relates to the field of HVAC systems, in particular to the commissioning of an HVAC system.

### BACKGROUND OF THE INVENTION

The commissioning of an HVAC system, in particular a heating/cooling system with a boiler or heat pump, usually requires that a technician is present on the premise of the HVAC system, so that the technician can manually enter configuration data via a touch panel provided on the boiler or heat pump.

This manual configuring process has the following disadvantages. Namely that the process can take rather long, and that in certain cases not all information needed for the configuration could be on hand with the technician. Further, due to manual entering of the configuration data, the configuring process is error-prone. Furthermore, considering that the installation is usually carried out in environments like, for instance, basements, it can be rather difficult for the technician to make a manual entering of the configuration data. In addition, the HVAC system provided on the premise is not always connected to the internet due to customer decision, installation situation and HVAC system limitation. As a result, it may become difficult during the configuration process for the HVAC system to get access to the actual configuration data or any other data needed for the configuration on that premise.

In WO 2019/144021 A1, a system for commissioning an HVAC system provides a control node and a first network node coupled to communicate with the control node. The first network node is configured to retrieve via a user interface objects configured at the control node, configure a second network node using the retrieved objects, and report the configuration of the second network node at the control node. A user interface of a first network node can access the objects at the control node. The first network node can apply the accessed objects to configure a second network node using a commissioning tool. The commissioning tool can be activated specifically for certain authorized HVAC personas or roles.

Further, DE 10 2017 217 760 A1 discloses a method for commissioning or maintenance of a control unit for a field device in building automation. A mobile communication terminal establishes a communication connection to the field device. The terminal is further connected to a central instance via a second communication channel. By means of an app installed to the terminal, an identification code is transmitted to the central server which then sends commissioning or maintenance instructions to the device. A feedback of the control unit to these instructions will be sent to the mobile device and then stored at the central server.

It is thus an object of the present invention to provide an easy, reliable and transparent commission process for both internet and non-internet connected HVAC systems.

Further, the planning of the HVAC system, or the preparation of the configuration file of the HVAC system, is usually carried out before the HVAC system is delivered to the user. For that purpose, another technician or a designer is usually entrusted with the planning/designing process, provided that he is provided with information concerning the site where the HVAC system is to be installed as well as information related to the HVAC system including, for instance, the type of heat generation required, the tank size and etc. Due to the complexity of the installation site concerning, for instance, the building in which the installation site is situated, one or more existing HVAC systems on that site as well as specific requirements from the customer, it has become more and more difficult for the designer to develop a pre-configured and completely customized configuration file for the HVAC system.

Further, since the actual configuration process is usually carried out by a separate technician on the premise of the HVAC system, who is different from the designer being entrusted with the preparation of the configuration file as well as an installation manual corresponding to the configuration file for that technician on site to carry out the actual configuration process, it has become also highly difficult for the designer to prepare beforehand a completely comprehensible and practical installation manual for the technician on site, and analogously also very difficult for the technician on site to understand from the installation manual what to install and how to arrange the wirings.

Thus, it is also an object of the present invention to provide a pre-configured configuration file, such that there is no need of any on-site manual entering of configuration data by a technician on site, whereas the technician on site can still have control over the commissioning process.

Further, a complete commissioning process may require that validation of the HVAC system configuration/installation should be carried out. However, a further manual entering of validation data remains still complicated, difficult and error-prone. Further, due to a lack of a reliable, pre-configured and customized configuration file and/or installation manual, it cannot be ensured that the manual validation of the installed HVAC system carried out by the technician on site can provide reliable validation results without precise input of trial-run data for each and every component comprised in the HVAC system.

US 2018/0087796 A1 is directed to a method for determining the operational state of an HVAC system. The method includes transmitting diagnostic data and/or commissioning settings to and from an HVAC system and server by means of a mobile device, comparing the data to a predetermined condition, and transmitting updated system information back to the HVAC system if needed.

Further, EP 3 557 352 B1 discloses a method for recording and processing life cycle information about a switch cabinet of an industrial plant, having a documentation server for storing data sheet information of built-in modules installed in the switch cabinet and functional information about their use in the context of the switch cabinet equipment in data records in a central archive database. Test and acceptance information of the switch cabinet is added to the data records via the documentation server, in order to trigger a commissioning release for the switch cabinet when the necessary test and acceptance information is complete.

It is thus also an object of the present invention to provide customized validation so as to ensure a more reliable and automated commissioning process.

In summary, it is an object of the present invention to provide an integrated planning/configuration and commissioning and validation process which ensures minimum risk of mistakes throughout the commissioning process.

### SUMMARY OF THE INVENTION

The present invention provides a method and system for configuring and commissioning an HVAC system in accordance with independent claims 1, 10, 12 and 13, as well as computer programs for respectively a computing device and a mobile device comprised in the system for configuring and commissioning an HVAC system in accordance with claims 14 and 15. Further, preferred embodiments in accordance with the present invention are described in the dependent claims.

In accordance with the present invention there is provided a method and system for configuring and commissioning an HVAC system, in particular for commissioning and validating the HVAC system.

The system comprises a computing device, a central storage unit, a mobile device and the HVAC system comprising an HVAC control unit, wherein the computing device, the central storage unit, the mobile device and the HVAC system are configured to carry out the respective method steps comprised in the method described in the following.

Therein, the system is a decentralized network where the computing device and the mobile device are provided at different locations, both with respective connections to the central storage unit. Preferably, the computing device is provided at the same location where the HVAC system product is manufactured or sold, whereas the mobile device is provided on the premise where that manufactured or sold HVAC system product is to be installed.

The method comprises: generating, by a computing device, a configuration file for commissioning the HVAC system such that the HVAC system is brought into operation, wherein the configuration file is generated at a configuration site and the HVAC system is to be delivered to an operation site; uploading, by the computing device, the generated configuration file to a central storage unit; downloading, by a mobile device, the uploaded configuration file from the central storage unit; transmitting, by the mobile device, the downloaded configuration file to an HVAC control unit comprised in the HVAC system located at the operation site; and commissioning, by the HVAC control unit, the HVAC system located at the operation site with the transmitted configuration file.

Therein, the computing device preferably refers to a device on which there can be installed a software for carrying out the generation of configuration files and which can be in the form of any of, but not limited to: a work station, a computer, a portable device, a laptop and a mobile phone. Additionally or alternatively, the computing device can perform the configuration file generation by remotely controlling the central storage unit, and preferably by reading and processing the relevant data stored in the central storage unit, or by downloading the relevant data from the central storage unit. Further, the computing device is located at the configuration site which is preferably, for instance, the production/manufacturing site such that the configuration is performed right after the HVAC system is manufactured, or the sales side such that the configuration file is generated after a customer has purchased the HVAC system. Furthermore, the operation site refers to the premise on which the HVAC system is to be installed after being delivered thereto.

Therein, further, the configuration file, or in other words, a commissioning file, is preferably in the form of an encrypted JavaScript Object Notation (JSON) file that holds all parameters necessary for configuring the HVAC system to be delivered to the operation site. More specifically, parameters necessary for configuring the HVAC system preferably relate to heat generation, domestic hot water (DHW), venting system, combustion air intake system, distribution system, heating circuits, and etc.

Therein, further, the central storage unit preferably refers to any central storage services provided either publicly or privately such that data can be stored thereon either encrypted or un-encrypted, and that data can be uploaded thereto or downloaded therefrom to be processed on one or more computing devices.

Therein, further, the mobile device preferably refers to a portable device which is capable of communicating with the central storage unit by uploading/downloading data, and is capable of communicating with the HVAC control unit through wired or wireless communication.

Therein, further, the HVAC control unit is preferably a programmable digital signal processing unit where analog and/or digital inputs and outputs are enabled. Preferably, the HVAC control unit can obtain values measured by sensors comprised in the HVAC system so as to generate instructions for the HVAC system to carry out the functions of, for instance, the boiler and pump. More preferably, the HVAC control unit is provided with a storage unit for storing the measured values and the generated instructions and any other data necessary for the controlling of the HVAC system.

Thus, according to the present invention, the configuration file generated by the computing device is already safely stored in the central storage unit at the time when the HVAC system is delivered to the operation site. Since the decentralized device, namely the mobile device, can directly download from the central storage unit the generated configuration file, transfer of the complete configuration file from the decentralized device to the HVAC system is achieved, enabling commissioning also for non-internet connected HVAC systems with the mobile device being the only device at the operation site that needs internet connectivity. As a result, such an automatic configuration process requires the least amount of human labor and maintains transparent during the whole commissioning process, such that risk of mistakes induced by human inputting is also minimized. In addition, that the configuration data is separately stored in the central storage unit also ensures that the configuration data can be handled in a reliable way.

Preferably, the method further comprises: displaying, by the mobile device, the configuration file downloaded from the central storage unit; and before transmitting, by the mobile device, the downloaded configuration file to the HVAC control unit, obtaining, by the mobile device, a confirmation from a user at the operation site.

Thus, the configuration file of the HVAC system is displayed on the mobile/decentralized device, such that the technician has to confirm the configuration before it can be transferred to the HVAC control unit. As a result, an additional manual check by the technician is ensured, improving reliability of the commissioning process.

Therein, preferably a system configuration image with a hydraulic piping diagram including corresponding accessories is also provided together with the configuration file which is downloaded to the mobile device. With the hydraulic piping diagram the technician on site can thus immediately see the planned system configuration, and hence accordingly relates to the actual arrangement of the piping on the operation site. In addition, the configuration file and/or the hydraulic piping diagram is preferably also downloaded to the computing device and displayed thereon in a similar manner as with the mobile device.

Thus, displaying of the configuration file ensures that the technician and/or the customer can additionally check or verify the data comprised in the configuration file which improves reliability of the commissioning process. Furthermore, that a further confirmation from the technician and/or the customer is needed ensures that the customer's consent is present when the technician on site actually carries out the commissioning process, thus further improving reliability of the commissioning process as well as user experience.

Additionally, it is also preferred that a customized installation manual with application-specific wiring instructions is also provided along with the configuration file and displayed on the mobile device and/or the computing device. In that case, not only the technician, but also the customer can, with the help of the customized installation manual, carry out the wirings in accordance with the wiring instructions comprised therein. The wiring instructions preferably comprise, for instance, instructing the technical/customer to connect sensors, pumps and etc. of the HVAC system to the respective inputs on the boiler.

Preferably, the method further comprises: before obtaining, by the mobile device, the confirmation from the user, determining, by the mobile device, that a local connection at the operation site between the mobile device and the HVAC control unit is established.

Therein, the local connection preferably refers to a suitable means for establishing a connection between the mobile device and the HVAC control unit, without requiring that the HVAC control unit should be always connected to the internet. Such a local connection can be, for instance, a Wi-Fi connection, or a wired connection using a cable.

This thus provides yet a further check in addition to the above-mentioned manual check from the technician. In other words, the commissioning process and the additional manual check of the configuration by the technician/customer can only by carried out when the mobile device is paired to the HVAC system/the HVAC control unit. As a result, it is ensured that the technician can only confirm the configuration/setup and carry out the commissioning when he is indeed on site. Therefore, reliability of the commissioning process is furthermore improved.

Preferably, the method further comprises: providing, by the computing device, the configuration file with identity information including at least one of first HVAC object information, first user information and first HVAC service information of the HVAC system to be delivered to the operation site; and before transmitting, by the mobile device, the downloaded configuration file to the HVAC control unit, checking, by the mobile device, whether the identity information comprised in the downloaded configuration file corresponds to installation information comprised in the HVAC system located at the operation site, wherein the installation information comprises at least one of second HVAC object information, second user information and second HVAC service information of the HVAC system located at the operation site.

Therein, the first/second HVAC object information preferably comprises a unique identifier provided to the HVAC system during the manufacturing process or upon shipment of the HVAC system, such that the HVAC object information can identify an individual HVAC system product. Further, the first/second user information preferably comprises contact information including, for instance, name and address of the customer. Further, the first/second HVAC service information preferably comprises planned new functions and services to be provided by the HVAC system that is to be delivered to the operation site.

Therein, further, by "first" HVAC object/service information and user information, it is referred to the respective information that is provided to the configuration file before the configuration file is uploaded to the central storage unit, whereas by "second" HVAC object/service information and user information, it is referred to the respective information preferably stored in the HVAC control unit before being delivered to the operation site. Therein, preferably the installation information is in the form of a barcode attached to the HVAC system at the operation site such that the mobile device can read the barcode and hence the installation information which is to be checked regarding its correspondence with the identity information stored in the central storage unit.

Since the HVAC system has been equipped with at least one of the above-mentioned HVAC object information, user information and HVAC service information, the decentralized device can only transfer the configuration file downloaded from the central storage unit to the HVAC system if the installation information corresponds with the identity information downloaded from the central storage unit along with the configuration file. In other words, only if the installation information comprised in the HVAC system actually delivered to the operation site corresponds to the installation information provided to the HVAC system before shipment/delivery and thus stored in the central storage unit, can the mobile device transmit the configuration file to the HVAC system on the operation site. As a result, it is ensured that the correct configuration file is transmitted, thus improving reliability and hence reducing risk of mistakes of the commissioning process.

Preferably, the method further comprises: storing, by the central storage unit, a first parameter set comprising a plurality of operation site parameters obtained from the operation site; storing, by the central storage unit, a second parameter set comprising a plurality of HVAC configuration parameters of the HVAC system to be delivered to the operation site; and generating, by the computing device, the configuration file for commissioning the HVAC system on the basis of the first parameter set and the second parameter set stored in the central storage unit.

More specifically, the plurality of operation site parameters preferably comprises detailed address of the customer including street number, street name, city, zip code, province/state and country, which parameters are obtained according to the relevant information provided by the customer. Further, the plurality of operation site parameters preferably comprises detailed information of the inquiry of the customer concerning the HVAC system installation.

Further, the plurality of operation site parameters preferably comprises parameters regarding the building in which the operation site is situated including, for instance, building type, installation altitude, design temperature, total living space (units), number of persons in residence, number of sinks, maximum volume flow (units) and etc., which parameters can be obtained by measuring the operation site, or can be extracted from any related documents provided by the customer, or can be obtained by reading photos taken of the operation site, depending on the amount of information that is available to the designer/technician and the installation situation of the operation site.

Further, the plurality of operation site parameters preferably comprises parameters regarding any previously installed or existing HVAC systems in terms of, for instance, existing heat generation, existing DHW, existing venting system, existing combustion air intake system, existing distribution system, existing heating circuits and etc., which parameters can be obtained by on-site checking and/or measuring of the existing HVAC systems at the operation site, or can be extracted from any related documents provided by the customer, or can be obtained by reading photos taken of any existing HVAC systems at the operation site, depending on the amount of information that is available to the designer as well as the installation situation of the operation site.

Therein, further, the plurality of HVAC configuration parameters comprise corresponding parameters regarding the new HVAC system, namely the HVAC system to be delivered and commissioned at the operation site. The parameters regarding the new HVAC system are similar to those regarding existing HVAC systems as described in the above. In particular, the plurality of HVAC configuration parameters is obtained according to the inquiry of the customer taking into consideration the above-mentioned parameters regarding the operation site including any existing HVAC systems.

Accordingly, a first parameter set comprises the plurality of operation site parameters in relation to the operation site, and a second parameter set comprises the plurality of HVAC configuration parameters in relation to the HVAC system which is to be delivered to the operation site. Since all the information/parameters regarding the operation site including the building, the customer, the customer inquiry and any existing HVAC systems as well as configuration parameters of the (new) HVAC system are considered in generating the configuration file, the designing/pre-configuring can be done in an accurate way, which ensures that the commissioning process can be effectively planned and hence implemented.

Preferably, the method further comprises: storing, by the central storage unit, a plurality of previous first parameter sets, wherein each set comprises a plurality of previous operation site parameters obtained from a corresponding previous operation site; storing, by the central storage unit, a plurality of previous second parameter sets, wherein each set comprises a plurality of previous HVAC configuration parameters of a corresponding previous HVAC system; generating, by the computing device, a plurality of previous configuration files each associated with any one set comprised in the plurality of previous first parameter sets and any one set comprised in the plurality of previous second parameter sets; matching, by the computing device, the stored first parameter set with a previous first parameter set comprised in the plurality of previous first parameter sets; matching, by the computing device, the stored second parameter set with a previous second parameter set comprised in the plurality of previous second parameter sets; and obtaining, by the computing device, the configuration file for commissioning the HVAC system on the basis of the plurality of previous configuration files.

Therein, by "previous" it is referred to any first parameter sets obtained from respective previous operation sites at the time of generating, for the current HVAC system which is to be delivered to the current operation site, the current configuration file for commissioning that current HVAC system. Preferably, the plurality of previous first parameter sets does not have to relate to any previous configuration processes that had actually taken place, but also can include previous first parameter sets which were not carried out but were stored in the central storage unit. As a result, a plurality of previous first parameter sets is already stored in the central storage unit at the time of generating the configuration file for commissioning the HVAC system by the computing device.

In a similar manner, a plurality of previous second parameters sets in relation to a plurality of respective previous HVAC systems is also stored as a resource in the central storage unit. As a result, when generating the current configuration file for commissioning the current HVAC system which is to be brought into operation, additionally any previous second parameter sets obtained from respective previous HVAC systems have already been stored in the central storage unit. Of course, the previous HVAC systems do not have to be actually commissioned, whereas it is only needed that the respective previous second parameter sets are stored in the central storage unit when generating the configuration file for commissioning the HCAC system by the computing device.

On the basis of the plurality of previous first parameter sets and the plurality of previous second parameter sets, a plurality of previous configuration files is generated and preferably stored in the central storage unit. Therein, each of the plurality of previous configuration files is generated on the basis of any one set comprised in the plurality of previous first parameter sets and any one set comprised in the plurality of previous second parameter sets. Preferably, the plurality of previous configuration files is provided in such a manner that all possible combinations of the any one set comprised in the plurality of previous first parameter sets and the any one set comprised in the plurality of previous second parameter sets, i.e., all possible previous configuration files, are provided and stored in the central storage unit.

Therefore, given that the currently stored first parameter set matches with or corresponds to a previous first parameter set and the currently stored second parameter set matches with or corresponds to a previous second parameter set, the previous configuration file which is associated with the matched previous first parameter set and the matched previous second parameter set can be directly used as the current configuration file which is to be transmitted to the current HVAC system.

As a result, all possible installation variants and in addition thereto any unique characteristics thereof are already stored in the central storage unit at the time of the generation of the current configuration file, such that a more accurate and customized configuration file as well as interactive installation manual can be provided which corresponds more accurately to the operation site of the customer. Thus, data that has been gathered in the field and preferably is processed and improved in the central storage unit can be combined with logic and domain knowledge that is only available to the manufacturer or service provider, resulting in improved accuracy and reliability of the provision of the configuration file and the installation manual.

Therein, preferably the previous/current configuration files are generated by simulations of the respective previous HVAC systems given the respective previous/current operation site parameters and HVAC configuration parameters. More preferably, the previous/current configuration files and/or operation site parameters and/or HVAC configuration parameters can be learned or generated via machine learning in the central storage unit. Therein, the generation of the configuration files and the corresponding simulations can either be carried out in the central storage unit or by the computing device, depending on the specific cases. Therein more preferably, the previous configuration files and/or the currently generated configuration file can include special installation warnings or suggestions if specific combinations of previous/current operation site parameters and previous/current HVAC configuration parameters are found to be present in those configuration files. In other words, any unique characteristics that had happened or have been found based on previous events can be integrated into the configuration files, thus providing the configuration files with improved accuracy for specific operation sites and/or HVAC systems.

Preferably, the method further comprises: providing, by the central storage unit, the uploaded configuration file with test run data for validation of the HVAC system and expected test result data associated with the test run data; initiating, by the HVAC control unit, a test run on the HVAC system located at the operation site according to the test run data comprised in the configuration file transmitted from the mobile device; and generating, by the HVAC control unit, validation analysis data on the basis of actual test result data obtained from the initiated test run and the expected test result data comprised in the configuration file transmitted from the mobile device.

Therein, the test run data refers to data specifying, for instance, test scenarios by configuring the HVAC system to, for instance, run under one or more modes in order to check whether the HVAC system after having been installed can run in those modes in accordance with the expected test result data. Further, the test run data can comprise, for instance, instructions for the HVAC system to operate under the one or more modes for a certain period of time in order for the outcomes to be checked. Further, the test run data can comprise repeating for every component comprised in the HVAC system a similar validation process.

Therein, further, the expected test result data preferably comprises, for instance, stipulating pre-determined criteria, for instance, expected temperature changes of the corresponding sensors applied in the one or more modes to be tested and validated. That is, the expected test result data stipulates that one or more pre-determined conditions must be met for the commissioning to be considered to be correct. The expected test result can stipulate that the temperature changes should be 0 or be not more than a pre-determined threshold value or be not lower than another pre-determined threshold value. Of course, the pre-determined conditions are not limited thereto. For instance, the temperature of a sensor can be monitored under the test for a period of time, such that it is checked whether the gradient of the sensor temperature in that period of time fulfils a pre-set condition.

Therein, further, the validation analysis data comprises an analysis as to whether the expected test result data in the one or more tested modes are all complied with, indicating that the system is commissioned correctly, or whether one or more of the respective expected test results are complied with, indicating that the commissioning is not carried out correctly.

Therein, further, preferably the expected test result data is generated on the basis of a plurality of previous expected test result data, which is similar as the generation of the configuration file based on a plurality of previous configuration files as described in the above. More specifically, it is preferred that the central storage unit stores a plurality of previous test run data each being associated with a corresponding combination of a previous first test parameter set (comprising a plurality of previous operation site test parameters) and a previous second test parameter set (comprising a plurality of previous HVAC configuration test parameters) and accordingly a corresponding previous expected test result data associated with each of the plurality of previous test run data. Thus, when a match in the plurality of previous test run data is found for the current test run data, namely that when a match in a plurality of previous first test parameter sets is found for the current first test parameter set and a match in a plurality of previous second test parameter sets is found for the current second test parameter set, the corresponding previous expected test result data comprised in the plurality of previous expected test result data and associated with the matched previous first test parameter set and the matched previous second test parameter set is used to generate the current expected test run data.

Further, it is preferred that the previous/current expected test result data is generated in accordance with simulation of the corresponding HVAC system, which is similar to the generation of the previous/current configuration file described in the above. Furthermore, it is preferred that the previous/current expected test result data and/or test run data and/or first and second test parameter sets are learned via machine learning in the central storage unit.

As a result, the commissioning process is automatically provided with validation related procedures, in that data related to test scenarios and trial runs is uploaded to and stored in the central storage unit together with the uploading and storing of the configuration file. Consequently, the HVAC unit automatically instructs the HVAC system to carry out test runs according to the test run data comprised in the received configuration file, providing a faster and more automated commissioning process with improved accuracy and reliability.

Preferably, the method further comprises: transmitting, by the HVAC control unit, the obtained actual test result data to the central storage unit, wherein the obtained actual test result data is directly transmitted to the central storage unit and/or transmitted to the central storage unit via the mobile device; and generating, by the central storage unit and/or by the mobile device, validation analysis data on the basis of the transmitted actual test result data and the expected test result data comprised in the configuration file.

In other words, when the HVAC system is provided with internet access, the actual test result data can be directly transmitted to and therefore stored in the central storage unit; whereas when there is no internet access provided to the HVAC system, the actual test result data can be transmitted to the central storage unit via the mobile device. Accordingly, the mobile device and/or the central storage unit can, in addition or alternatively to the HVAC control unit, generate the validation analysis data. In other words, any one of the HVAC system, the mobile device and the central storage unit is capable to generate validation analysis data for improving reliability and accuracy of the validation process, regardless of whether the HVAC system can be connected to the internet or not.

Preferably, the method further comprises: receiving, by the mobile device, the generated validation analysis data from the HVAC control unit or the central storage unit; generating, by the mobile device, user instructions on the basis of the transmitted validation analysis data; and displaying, by the mobile device, the generated user instructions and/or the transmitted validation analysis data.

In the cases where the HVAC system and/or the central storage unit is already provided with the generated validation analysis data, the mobile device can further receive therefrom the validation analysis data and accordingly generate user instructions on the basis thereof. Preferably, the user instructions are provided in accordance with the validation analysis data, such that when the pre-set criteria/threshold values comprised in the expected test result data are not met according to the actual test result data, the user instructions comprise customized instructions showing the user (the technician and/or the customer) how to fix the installation.

The user instructions can also be generated by the HVAC control unit on the basis of the validation analysis data, such that the HVAC control unit then transmits the user instructions either directly to the central storage unit or via the mobile device to the central storage unit. Preferably, the user instructions can also be generated by the central storage unit after having received from the HVAC control unit and/or the mobile device the validation analysis data.

Further, the user instructions, preferably comprised in a user instruction set, generated on the basis of the validation analysis data associated with the test run data as well as the expected test result data can also be provided by a finding a match in a plurality of previous user instruction sets, which is similar to the generation of the expected test result data on the basis of a plurality of previous expected test result data. More specifically, when a match in the plurality of previous test run data is found for the current test run data, namely that when a match in the plurality of previous first test parameter sets is found for the current first test parameter set and a match in the plurality of previous second test parameter sets is found for the current second test parameter set, the corresponding previous user instruction set comprised in the plurality of previous user instruction sets and associated with the matched previous test run data, i.e., associated with the matched previous first test parameter set and the matched previous second test parameter set, is used to generate the current user instruction set comprising the current user instructions.

Therein, preferably the previous/current user instructions are generated by simulations of the respective previous/current HVAC systems given the respective previous/current first/second test parameter sets. More preferably, the previous/current user instructions and/or the operation site test parameters and/or the HVAC configuration test parameters can be learned or generated via machine learning in the central storage unit.

As a result, with the displayed user instructions and/or validation analysis data, the technician on site and/or the customer (preferably on a different mobile device different from that used by the technician) can check whether the installation and commissioning is properly carried out and can accordingly take further actions in accordance with the user instructions. Thus, reliability and accuracy of the commissioning process is further improved.

Thus, in accordance with the present invention there is provided a method and system for configuring and commissioning an HVAC system, wherein the configuration file is pre-configured before delivering the HVAC system preferably on the basis of previous configuration files associated with previous HVAC systems and previous operation sites, thus improving accuracy and reliability and in the meantime avoiding on-site manual entering of configuration data by the technician, resulting in minimizing the risk of mistakes throughout the whole commissioning process, wherein additionally validation is carried out in completing the commissioning process, thus further improving reliability and efficiency of the commissioning process.

Further, in accordance with the present invention there is provided a method and system for configuring and commissioning an HVAC system, in particular for the provision of an integrated planning/designing and commissioning process.

The system, or a decentralized network, comprises a computing device, a central storage unit, a mobile device and the HVAC system comprising an HVAC control unit, wherein the computing device, the central storage unit, the mobile device and the HVAC system are configured to carry out the respective method steps comprised in the method described in the following.

The method comprises: storing, by a central storage unit, a first parameter set comprising a plurality of operation site parameters obtained from an operation site, wherein the HVAC system is to be delivered to the operation site; storing, by the central storage unit, a second parameter set comprising a plurality of HVAC configuration parameters of the HVAC system; generating, by a computing device, a configuration file for commissioning the HVAC system such that the HVAC system is brought into operation, wherein the configuration file is generated at a configuration site on the basis of the first parameter set and the second parameter set stored in the central storage unit; and commissioning, by an HVAC control unit comprised in the HVAC system, the HVAC system located at the operation site with the transmitted configuration file.

Therein, the plurality of operation site parameters and the plurality of HVAC configuration parameters are discussed analogously in the above. The configuration file is thus generated at the configuration site on the basis of the operation site parameters associated with the operation site to which the HVAC system is to be delivered and the HVAC configuration parameters of that HVAC system. Thus, the configuration file is generated taking into consideration all relevant information concerning the operation site and the customer as well as the configuration parameters of the HVAC system, resulting in a reliable and accurate configuration file for bringing the HVAC system into operation.

Preferably, the method further comprises: storing, by the central storage unit, a plurality of previous first parameter sets, wherein each set comprises a plurality of previous operation site parameters obtained from a corresponding previous operation site; storing, by the central storage unit, a plurality of previous second parameter sets, wherein each set comprises a plurality of previous HVAC configuration parameters of a corresponding previous HVAC system; generating, by the computing device, a plurality of previous configuration files each associated with any one set comprised in the plurality of previous first parameter sets and any one set comprised in the plurality of previous second parameter sets; matching, by the computing device, the stored first parameter set with a previous first parameter set comprised in the plurality of previous first parameter sets; matching, by the computing device, the stored second parameter set with a previous second parameter set comprised in the plurality of previous second parameter sets; and obtaining, by the computing device, the configuration file for commissioning the HVAC system on the basis of the plurality of previous configuration files.

Therein, the generation of the configuration file on the basis of a plurality of previous configuration files which is generated according to previous fist/second parameter sets is also discussed analogously in the above. Accordingly, a customized and reliable configuration file can be provided on the basis of information collected in the past concerning previous HVAC systems and previous operation sites, which information is only available to the manufacturer or the service provider.

In addition, it is preferred that the data concerning the plurality of previous first parameter sets, the plurality of previous second parameter sets and the plurality of previous configuration files are translated by means of Open Test sequence eXchange (OTX) sequences into the configuration file, which accordingly configures the HVAC system and sets all necessary data points so that the HVAC system is configured correctly, supporting the installation.

Thus, in accordance with the present invention there is provided a method and system for configuring and commissioning an HVAC system, in particular in an integrated planning/designing and commissioning process which can take into consideration all possible installation variants and the therewith generated unique characteristics thereof, resulting in the provision of a customized and reliable configuration file as well as installation manual for commissioning the HVAC system and instructing the technician and/or the customer on site.

In addition, in accordance with the present invention there is provided a computer program comprising instructions which, when be executed by a computing device, cause the computing device to carry out the steps of the above-mentioned method.

In accordance with the present invention there is further provided a computer program comprising instructions which, when being executed by a mobile device, cause the mobile device to carry out the steps of the method as described in the above.

### BRIEF DESCRIPTION OF THE DRAWINGS

Fig. 1 shows a schematic diagram of a system for configuring and commissioning an HVAC system according to the present invention;
Fig. 2A shows an embodiment of a method for configuring and commissioning an HVAC system according to the present invention;
Fig. 2B shows another embodiment of a method for configuring and commissioning an HVAC system according to the present invention;
Fig. 2C shows another embodiment of a method for configuring and commissioning an HVAC system according to the present invention;
Fig. 3A shows another embodiment of a method for configuring and commissioning an HVAC system according to the present invention;
Fig. 3B shows another embodiment of a method for configuring and commissioning an HVAC system according to the present invention;
Fig. 4A shows another embodiment of a method for configuring and commissioning an HVAC system according to the present invention; and
Fig. 4B shows another embodiment of a method for configuring and commissioning an HVAC system according to the present invention.

### DETAILED DESCRIPTION OF THE DRAWINGS

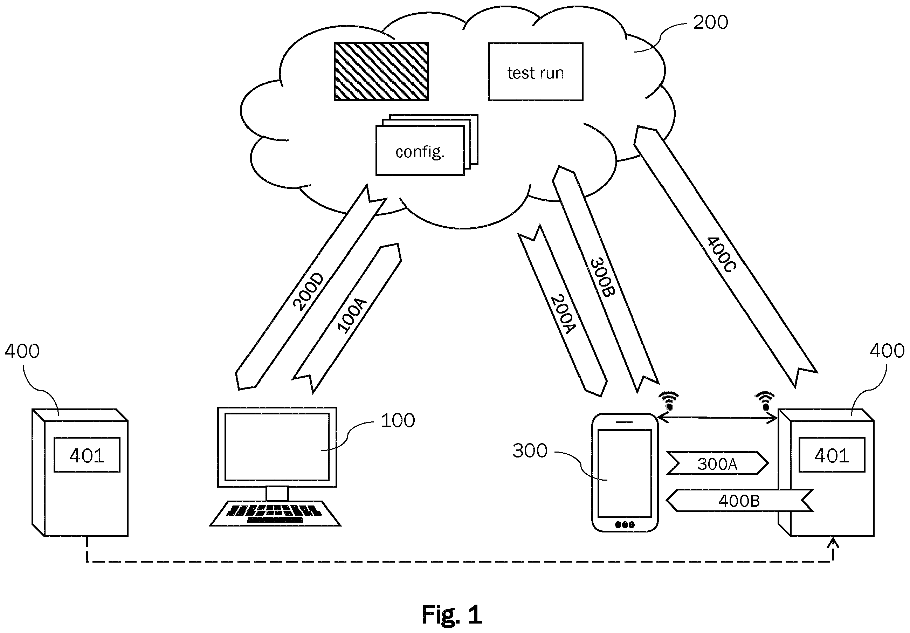

Fig. 1 shows a schematic diagram of a system for configuring and commissioning an HVAC system according to the present invention. Therein, the system comprises a computing device 100, a central storage unit 200, a mobile device 300 and an HVAC system 400.

The computing device 100 can be any suitable computing device capable of data processing as well as communication with the central storage unit 200 and the HVAC system 400. The computing device 100 can thus be a computer, a portable device including a mobile phone and a laptop, a work station and etc.

Further, the computing device 100 is provided at a configuration site including, for instance, a production site and a store, such that the computing device 100 is configured to provide the HVAC system 400 with a configuration file right after the HVAC system product is manufactured or after a customer has purchased the HVAC system product. Alternatively, the computing device 100 does not have to be located at the configuration site, but needs only to have access to data concerning the HVAC system 400 stored in the central storage unit 200, such that configuration file can be generated with data in the central storage unit 200.

Further, the computing device 100 is configured to generate a configuration file for commissioning the HVAC system 400 before the HVAC system 400 is delivered to an operation site which is different from the configuration site. As illustrated in Fig. 1, the configuration file generated by the computing device 100 can be transmitted to the central storage unit 200 via a communication path 100A between the computing device 100 and the central storage unit 200.

Further, the central storage unit 200 can be any suitable private and/or public cloud services that is capable of communicating with other computing devices and/or data processing. As illustrated in Fig. 1, the central storage unit 200 receives, via the communication path 100A, the configuration file from the computing device 100 and transmits, via a communication path 200A between the central storage 200 and the mobile device 300, the configuration file to the mobile device 300.

The mobile device 300 is provided at the operation site and can be used by a technician or a customer (i.e., the user). The operation site is the site where the HVAC system is to be installed and commissioned/configured. It is preferred that more than one mobile devices are provided, wherein one mobile device is provided to the technician on site, i.e., at the operation site, and at least another mobile device is provided to the customer who can either be on site or not.

Further, the mobile device 300 is provided with a suitable means for establishing a local connection to the HVAC system 400 which is already delivered to the operation site. As illustrated in Fig. 1, a Wi-Fi connection can be established between the mobile device 300 and the HVAC system 400 on the operation site. Of course, other suitable means for establishing a local connection therebetween can also be applied including, for instance, wired connections. Thus the mobile device 300 transmits, via a communication path 300A, the configuration file to a HVAC control unit 401 comprised in the HVAC system 400. The HVAC control unit 401 then commissions the HVAC system 400 according to the transmitted configuration file.

The HVAC control unit 401 comprised in the HVAC system comprises preferably a digital signal processing module that can read and/or output analog and/or digital signals, so as to receive measured values obtained by sensors comprised in the HVAC system and on the basis of that, to provide instructions for the HVAC system to carry out corresponding functions. Further, the HVAC control unit 401 is provided with means for communicating with the mobile device 300 and/or the central storage unit 200 using internet connection and/or local connections including wireless and wired connections.

As illustrated in Fig.1, there are provided between the mobile device 300 and the central storage unit 200, between the HVAC system 400 and the mobile device 300, as well as between the central storage unit 200 and the computing device 100 bidirectional communications, respectively. Further, between the HVAC system 400 and the central storage unit 200 there is provided at least communication from the HVAC system 400 to the central storage unit 200. Although not shown in Fig. 1, the HVAC system 400 is also configured to receive data from the central storage unit 200.

For instance, the HVAC control unit 401 is configured to receive, via the communication path 300A, test run data comprised in the configuration file, and accordingly is configured to initiate a test run on the HVAC system 400 in accordance with the received test run data. The HVAC control unit 401 is further configured to generate validation analysis data on the basis of actual test result data obtained from that initiated test run and expected test result data comprised in the configuration file transmitted from the mobile device 300. In order for the technician to obtain the validation analysis data, the HVAC control unit 401 can transmit that validation analysis data, via a communication path 400B, to the mobile device 300 which is preferably also configured to further transmit that validation analysis data, via a communication path 300B, to the central storage unit 200. In addition, if there is provided internet access to the HVAC control unit 401, the HVAC control unit 401 is also configured to transmit the validation analysis data, via a communication path 400C, to the central storage unit 200.

Alternatively or additionally, after having initiated the test run, the HVAC control unit 401 can transmit the obtained actual test result data via respectively the communication paths 400B and/or 300B as well as the communication path 400C to respectively the mobile device 300 and/or the central storage unit 200, such that both the mobile device 300 and the central storage unit 200 are configured to generate validation analysis data on the basis of the received actual obtained test result data and the expected test result data comprised in the configuration file. In other words, the HVAC control unit 401, the mobile device 300 and the central storage unit 200 are all configured to generate validation analysis data on the basis of actual test result data and the expected test result data, and to process that validation analysis data.

As illustrated in Fig. 1, there is provided a two-way communication between the central storage unit 200 and the computing device 100. For a previous operation site, the central storage unit 200 is configured to store a previous set of operation site parameters, and for a previous HVAC system, to store a previous set of HVAC configuration parameters. The computing device 100 is configured to download, via a communication path 200D, previous operation site parameters and previous HVAC configuration parameters from the central storage unit 200, and accordingly is configured to generate corresponding previous configuration files for all possible combinations of any one set of previous operations site parameters and any one set of previous HVAC configuration parameters.

During the planning and designing of the configuration file for a new/current HVAC system, the central storage unit 200 is configured to store a current set of operation site parameters obtained from the current operation site and a current set of HVAC configuration parameters of the new/current HVAC system. The computing device 100 is further configured to find for the current set of operation site parameters a match in the stored sets of previous operation site parameters and for the current set of HVAC configuration parameters a match in the stored sets of previous HVAC configuration parameters. As a result, the previous configuration file corresponding to the matched set of previous operation site parameters and the matched set of previous HVAC configuration parameters is used as the basis for generating the configuration file for the new/current HVAC system.

It is preferred that the previous and/or current configuration files and/or expected test result data are generated preferably through simulation, and more preferably via machine learning, of the respective previous and/or current HVAC systems using the corresponding operation site parameters and HVAC configuration parameters.

Additionally and/or alternatively, the central storage unit 200 is provided with data processing means which not only performs storage of previous/current parameters, but also is capable of generating previous/current configuration files thereof. As a result, the computing device 100 does not have to download the parameters stored in the central storage unit 200 for generating configuration files, but can directly download the generated configuration files from the central storage unit 200.

In addition, the mobile device 300 is also provided with a display means, such that the configuration file received at the mobile device 300, the test run data and the expected test result data received at the mobile device 300, as well as the validation analysis data transmitted from the HVAC control unit 401 and/or the central storage unit 200 or generated by the mobile device 300 can all be displayed on the mobile device 300 for additional manual check from the technician or the customer.

Additionally, the mobile device 300 is configured to generate and display specific user instructions on the basis of the validation analysis data transmitted from the central storage unit 200 or the HVAC control unit 401 or generated by the mobile device 300, such that the technician and/or the customer can follow the generated user instructions for completing the commissioning process after validation. Additionally or alternatively, the user instructions can be generated by the central storage unit 200 and/or the HVAC control unit 401 since they are both provided with the capability of generating and processing the validation analysis data.

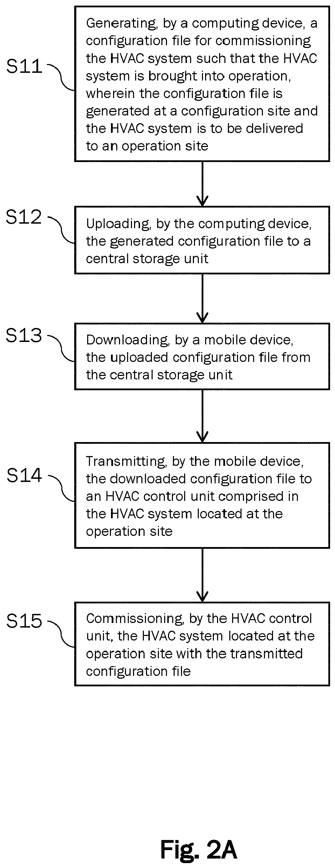

Fig. 2A shows an embodiment of a method for configuring and commissioning an HVAC system in accordance with the present invention, in particular for providing an easy, reliable and transparent commissioning process for both internet and non-internet connected HVAC systems. The computing device 100, the central storage unit 200, the mobile device 300 and the HVAC system 400 in the aforementioned system as described in the above are configured to carry out the following method steps.

Therein, the method comprises a method step S11: generating, by a computing device, a configuration file for commissioning the HVAC system such that the HVAC system is brought into operation, wherein the configuration file is generated at a configuration site and the HVAC system is to be delivered to an operation site.

Further, the method comprises a method step S12: uploading, by the computing device, the generated configuration file to a central storage unit.

Further, the method comprises a method step S13: downloading, by a mobile device, the uploaded configuration file from the central storage unit.

Further, the method comprises a method step S14: transmitting, by the mobile device, the downloaded configuration file to an HVAC control unit comprised in the HVAC system located at the operation site.

Further, the method comprises a method step S15: commissioning, by the HVAC control unit, the HVAC system located at the operation site with the transmitted configuration file.

As a result, the mobile device is the only device that needs internet connection to the central storage unit, such that the HVAC system can be ensured to receive the configuration file even if there is no internet access for the HVAC system. Further, that the configuration file is directly transferred from the computing device at the configuration site to the central storage unit, and then downloaded from the central storage unit to the mobile device ensures that the configuration file remains intact during the transmission, resulting in a reliable and transparent commissioning process.

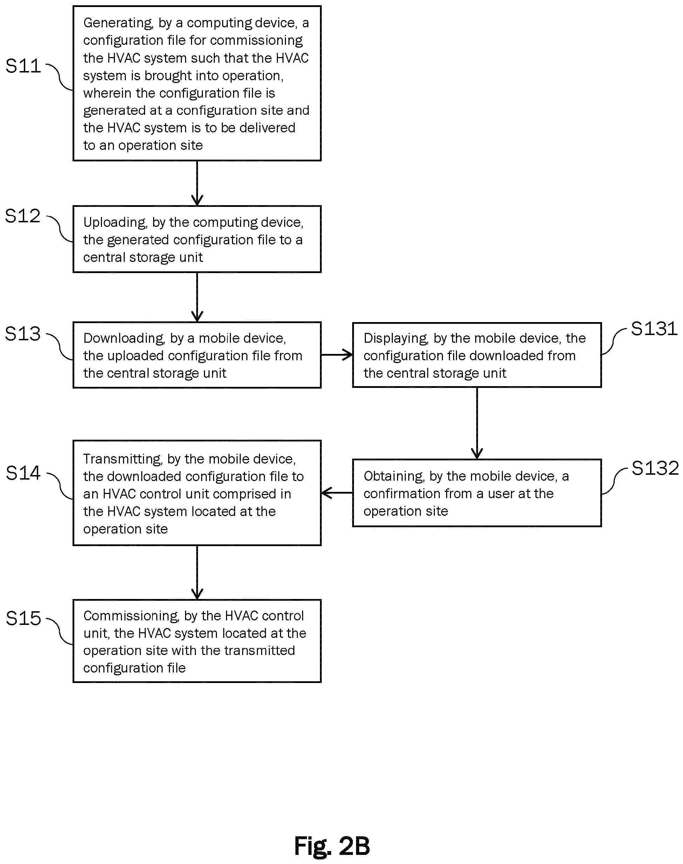

Fig. 2B illustrates another embodiment of the method for configuring and commissioning an HVAC system in accordance with the present invention, in particular in accordance with Fig. 2A. The computing device 100, the central storage unit 200, the mobile device 300 and the HVAC system 400 in the aforementioned system as described in the above are configured to carry out the following method steps.

Therein, after S13 where the mobile device has downloaded the configuration file from the central storage unit, and before S14 where the mobile deice transmits that configuration file to the HVAC control unit, the method further comprises a method step S131: displaying the configuration file downloaded from the central storage unit, and a method step S132: obtaining a confirmation from a user at the operation site, which are both carried out by the mobile device.

Consequently, an additional manual check from the user is provided, improving reliability of the commissioning process.

Therein, preferably the method as illustrated in Fig. 2B further comprises determining, by the mobile device, that a local connection at the operation site is established between the mobile device and the HVAC control unit before S132 where the mobile device obtains the confirmation from the user.

Consequently, a further additional check is provided by checking the local connection, ensuring that the configuration file can only be transmitted to the HVAC system when the technician is indeed at the operation site.

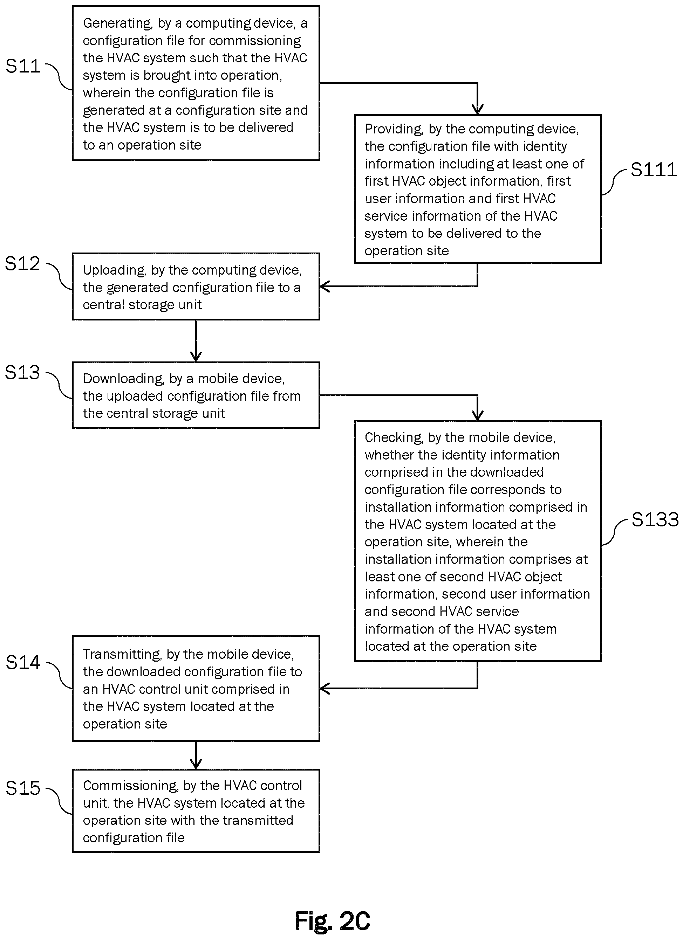

Fig. 2C illustrates another embodiment of the method for configuring and commissioning an HVAC system in accordance with the present invention, in particular in accordance with Fig. 2A. The computing device 100, the central storage unit 200, the mobile device 300 and the HVAC system 400 in the aforementioned system as described in the above are configured to carry out the following method steps.

Therein, alternative or in addition to S11, the method further comprises a method step Sill: providing the configuration file with identity information including at least one of first HVAC object information, first user information and first HVAC service information of the HVAC system to be delivered to the operation site.

In other words, before delivering the HVAC system to the operation site and during and/or after the generation of the configuration file, identity information as described above is included in the configuration file. Therein, the first HVAC object information, the first user information and the first HVAC service information of the HVAC system are used to identify the HVAC system to be delivered to the operation site. As a result, the configuration file generated by the computing device is provided with identity information and hence, the configuration file downloaded to the mobile device is accordingly provided with such identity information.

After that and according to Fig. 2C, the method further comprises, after S13 where the configuration file is downloaded from the central storage unit by the mobile device and before S14 where the configuration file is transmitted to the HVAC control unit comprised in the HVAC system at the operation site, a method step S133: checking by the mobile device whether the identity information comprised in the downloaded configuration file corresponds to installation information comprised in the HVAC system located at the operation site, wherein the installation information comprises at least one of second HVAC object information, second user information and second HVAC service information of the HVAC system located at the operation site.

Therein, the installation information refers to such information provided in the HVAC system that is already delivered to the operation site for identifying the HVAC system at the operation site. It is thus checked on the basis of the identity information downloaded from the central storage unit and before transmitting the configuration file to the HVAC control unit, whether the delivered HVAC system is correct, and/or whether the services installed with the delivered HVAC system are correct, and/or whether the customer related information associated with the delivered HVAC system is correct.

As a result, transparency and reliability of the commissioning process can be improved at the very beginning of the commissioning process by a still further additional check.

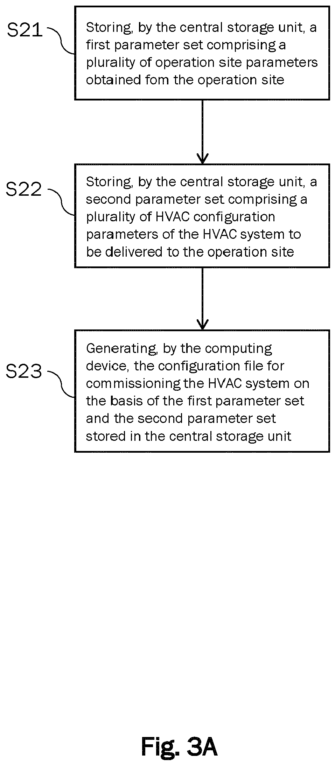

Fig. 3A shows another embodiment of the method for configuring and commissioning an HVAC system, relating to in particular a customized and automated planning/designing and commissioning process with improved reliability in accordance with the present invention. The computing device 100, the central storage unit 200, the mobile device 300 and the HVAC system 400 in the aforementioned system as described in the above are configured to carry out the following method steps.

Therein, the method comprises a method step S21: storing, by the central storage unit, a first parameter set comprising a plurality of operation site parameters obtained from the operation site.

The method further comprises a method step S22: storing, by the central storage unit, a second parameter set comprising a plurality of HVAC configuration parameters of the HVAC system to be delivered to the operation site.

The method further comprises a method step S23: generating, by the computing device, the configuration file for commissioning the HVAC system on the basis of the first parameter set and the second parameter set stored in the central storage unit.

Therein, the first/second parameter set relates to the current HVAC system that is to be delivered to the operation site. The computing device can carry out the method step S23 by remotely controlling the central storage unit, or by downloading the first and second parameter sets from the central storage unit and generating the configuration file on the computing device. Further, although the method step S23 is mentioned as being carried out by the computing device, the central storage unit being provided a suitable data processing means can also carry out such a method step.

Preferably, the method steps S21-S23, or at least method steps S21 and S22, are carried out before the method step S11.

As a result, parameters of the operation site and parameters regarding configuration of the HVAC system are all taken into consideration in the generation of the configuration file, improving reliability of the configuration file and hence, the commissioning process. The provision of such a configuration file further results in that no manual entering of configuration data is needed at the operation site, reducing mistakes induced by human input and hence, improving reliability of the commission process.

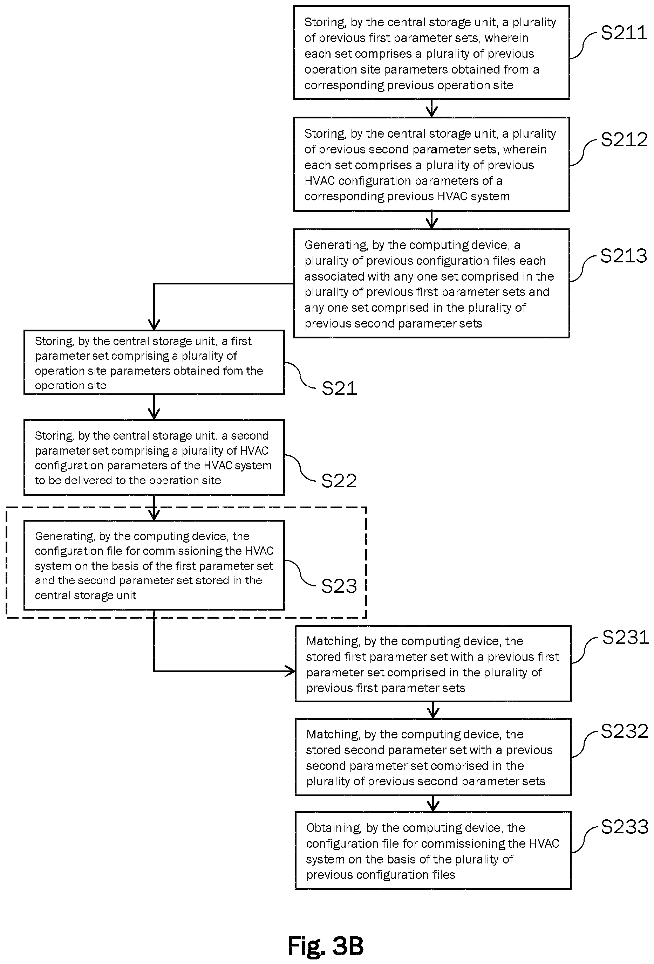

Fig. 3B illustrates another embodiment of the above-mentioned method for configuring and commissioning an HVAC system, relating to in particular a planning/designing and commissioning process on the basis of Fig. 3A in accordance with the present invention. The computing device 100, the central storage unit 200, the mobile device 300 and the HVAC system 400 in the aforementioned system as described in the above are configured to carry out the following method steps.

Therein, before the method steps S21 and S22 of storing the first/second parameter sets, the method further comprises method steps S211-S213.

More specifically, the method further comprises the method step S211: storing, by the central storage unit, a plurality of previous first parameter sets, wherein each set comprises a plurality of previous operation site parameters obtained from a corresponding previous operation site.

The method further comprises the method step S212: storing, by the central storage unit, a plurality of previous second parameter sets, wherein each set comprises a plurality of previous HVAC configuration parameters of a corresponding previous HVAC system.

The method further comprises the method step S213: generating, by the computing device, a plurality of previous configuration files each associated with any one set comprised in the plurality of previous first parameter sets and any one set comprised in the plurality of previous second parameter sets.

Further, alternatively or additionally to the method step S23 as described in the above, the generation of the configuration file for commissioning the HVAC system can comprise as illustrated in Fig. 3B method steps S231-S233.

More specifically, the method further comprises the method step S231: matching, by the computing device, the stored first parameter set with a previous first parameter set comprised in the plurality of previous first parameter sets, and the method step S232: matching, by the computing device, the stored second parameter set with a previous second parameter set comprised in the plurality of previous second parameter sets.

Further, the method comprises the method step S233: obtaining, by the computing device, the configuration file for commissioning the HVAC system on the basis of the plurality of previous configuration files.

By matching with the previously stored parameters of previous operations sites and previous HVAC systems, such information collected in the past and only known to the manufacturer or service provider is considered in generating the configuration file for the current HVAC system, ensuring improved reliability of the automated commissioning process.

Although the method steps as mentioned in the above are described as being carried out by the computing device after having downloaded the relevant parameters from the central storage unit, the present invention also includes that those method steps can alternatively or additionally be carried out by the central storage unit or by the computing device through remotely controlling the central storage unit.

In the following there is provided an embodiment showing the procedure of the generation of a customized configuration file including an installation manual.

### Embodiment: customized configuration file

In this embodiment the customized and automatic configuring and commissioning process is provided. Information about potential installation opportunity is gathered, including the work type (retro fit or new installation), name, address, phone number and an e-mail address of the home owner and address of the actual installation site, which information are all comprised in the first parameter set and thus comprised in the operation site parameters obtained from the actual installation site. Further, information about actual project specifics is gathered, including heat demand, system attributes and etc., which information is all comprised in the second parameter set comprising the HVAC configuration parameters of the HVAC system to be delivered and installed at the operation site, namely the installation site.

All information is then saved in the central storage unit. Further, the collected information is downloaded from the central storage unit and presented in a summary as displayed on the computing device. The computing device is then further configured to convert the collected information into a system configuration diagram with hydraulic piping including accessories, a customized installation manual with application-specific wiring instructions, as well as a commissioning file for later being transmitted to the HVAC system.

Therein, the system configuration with hydraulic piping diagram comprises arrangements of the piping at the actual installation site, the customized installation manual comprises installation guides instructing the technician to implement the wiring of the DHW cylinders, the low loss header (LLH), the pumps and etc. Therein, the commissioning file can be in the form of an encrypted JSON file that holds all virtual device data points necessary to configure the HVAC system. Thereafter, a design summary is formatted for the end-user and a logbook of change notices that happened during the design process is generated.

The conversion of the collected information into the piping diagram, the installation manual and the commissioning file is done utilizing the Open Diagnostic Data Exchange (ODX)/OTX standard with OTX sequences used to translate raw information.

Thereafter, the generated files are uploaded to the central storage unit and can be further downloaded for presenting a summary and customized installation manual to the technician. Thereafter, the technician/the customer can confirm the designed configuration file. The generated commissioning file is then transmitted or downloaded by the mobile device from the central storage unit which further presents a summary of the collected information.

The commissioning is then carried out by transferring the commissioning file to the HVAC system via direct Wi-Fi connection. After having finished the commissioning process, a commissioning report is uploaded from the commissioning app installed on the mobile device to the central storage unit.

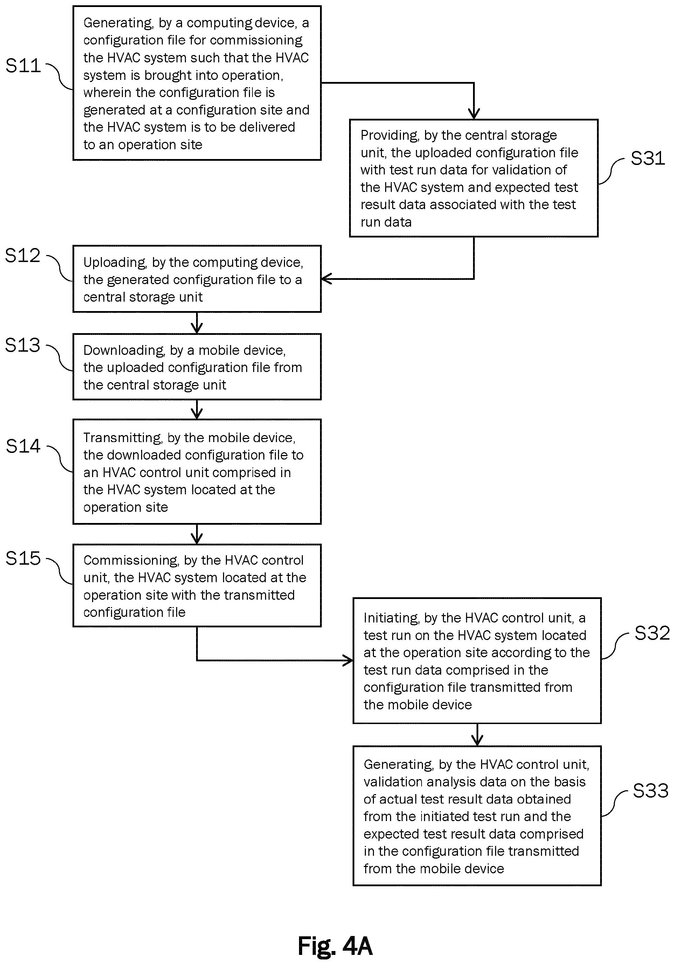

Fig. 4A illustrates another embodiment of the method for configuring and commissioning an HVAC system, relating to in particular a complete commissioning and validation process in accordance with the present invention. The computing device 100, the central storage unit 200, the mobile device 300 and the HVAC system 400 in the aforementioned system as described in the above are configured to carry out the following method steps.

Therein, the method comprises, in addition to the method step S11 of generating the configuration file for bringing the HVAC system into operation and before the method step S12 of uploading the configuration file to the central storage unit, a method step S31: providing, by the central storage unit, the uploaded configuration file with test run data for validation of the HVAC system and expected test result data associated with the test run data.

Thereafter, the test run data and the expected test result data are uploaded by the computing device to the central storage unit along with the configuration file according to S12. Further, that uploaded configuration file together with the test run data and the expected test result data is downloaded by the mobile device from the central storage unit according to S13 and further transmitted by the mobile deice to the HVAC control unit comprised in the HVAC system located at the operation site according to S14.

The method further comprises, in addition to the method step S15 of commissioning the HVAC system on the basis of the configuration file, a method step S32: initiating, by the HVAC control unit, a test run on the HVAC system located at the operation site according to the test run data comprised in the configuration file transmitted from the mobile device; and thereafter a method step S33: generating, by the HVAC control unit, validation analysis data on the basis of actual test result data obtained from the initiated test run and the expected test result data comprised in the configuration file transmitted from the mobile device.

As a result, an automated and customized validation is provided in completing the commissioning process, which requires no manual input and thus, results in improved reliability of the commissioning process.

Further, after obtaining, by the HVAC control unit, the actual test result data obtained from the initiated test run, the method can further comprise transmitting, by the HVAC control unit, the obtained actual test result data to the central storage unit. Therein, the actual rest result data can be directly transmitted from the HVAC control unit to the central storage unit, provided there is internet access for the HVAC system. Additionally or alternatively, the actual test result data can be transmitted to the central storage unit via the mobile device, in particular when there is no internet access for the HVAC control unit. Therefore, the central storage unit and/or the mobile device is capable of generating validation analysis data on the basis of the transmitted actual test result data and the expected test result data which is already comprised in the configuration file stored thereon or received thereby. Additionally or alternatively, the central storage unit and the mobile device are configured to receive the validation analysis data from the HVAC control unit in a similar manner. Additionally or alternatively, the validation analysis data, whether generated by the HVAC control unit or generated by the mobile device, can be directly transmitted to the central storage unit by respectively the HVAC control system or the mobile device.

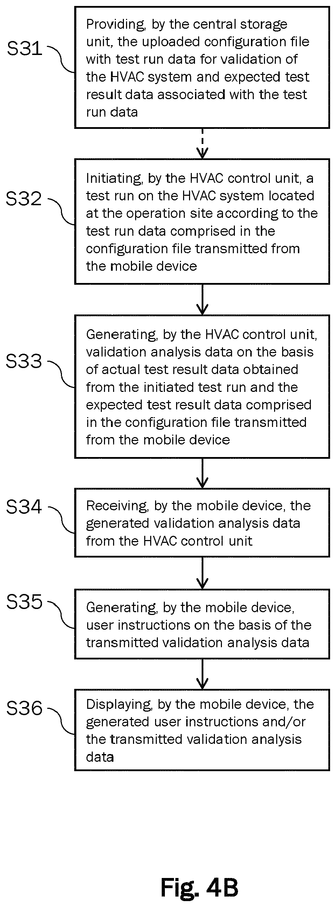

Fig. 4B illustrates another embodiment in accordance with the method for configuring and commissioning an HVAC system in accordance with the present invention, in particular in accordance with Fig. 4A. The computing device 100, the central storage unit 200, the mobile device 300 and the HVAC system 400 in the aforementioned system as described in the above are configured to carry out the following method steps.

Therein, after the method steps S31-S33 have been carried out, the method further comprises a method step S34: receiving, by the mobile device, the generated validation analysis data from the HVAC control unit. Alternatively or additionally, provided that the HVAC control unit has transmitted the validation analysis data to the central storage unit, the mobile device can also receive the validation analysis data from the central storage unit.

After that, the method further comprises a method step S35: generating, by the mobile device, user instructions on the basis of the transmitted validation analysis data; and a method step S36: displaying, by the mobile device, the generated user instructions and/or the transmitted validation analysis data. Alternatively or additionally, the user instructions can also be provided by the central storage unit or the HVAC control unit.

Thus, the technician or the customer is instructed as to how to fix an incorrect installation and commissioning if the expected test result stipulated by the expected test result data is not met during the validation process.

In the following, there are provided two embodiments showing the procedure of the installation validation of the HVAC system.

### Embodiment: DHW-heating piping validation

In this embodiment in order to initiate a test run on the HVAC system, the boiler operation mode is turned to DHW mode which provides hot water only to the DHW tank and not to the heating system according to the test run data comprised in the configuration file. Thereafter, accordingto the test run data this operation mode is performed for 10 minutes, and then the outcome is checked. According to the expected test result data, if both of the following statements are found to be true, the boiler is determined as having been piped and wired correctly. The statements are that: did the DHW temperature sensor increase by more than 5°C, and did the low loss header (LLH) temperature sensor stay constant (+/-5°C).

Thereafter, according to the test run data the same procedure is repeated with the operation mode heating. In this mode, the following two statements are checked according to the expected test result data. Namely that: did the DHW temperature sensor stay constant (+- 5°C), and did the low loss header (LLH) temperature increases by more than 5°C.

If both tests have been performed successfully it is known that the system has been piped correctly, namely that DHW and heating as well as supply and return directions are correctly provided. In addition, correct wiring of DHW sensor and LLH sensor can also be confirmed. However, if both tests fail, a recommended analysis comprised in the user instructions to fix the installation will be shown according to the validation analysis data.

### Embodiment: Proper installation of supply side pumps

In this embodiment according to the test run data the boiler is instructed to operate in the heating mode until the LLH temperature sensor turns the boiler off since the target temperature has been reached. Thereafter, the burner shuts off and gets blocked for the duration of the test. In order to test the correct installation of any pump on the supply side, according to the test run data the pump undergoing the test is powered for 5 minutes and the LLH temperature sensor is monitored. Further, according to the expected test result data if the temperature drops with a gradient smaller than X, it means that the pump was properly installed; if the gradient is larger than X, it means that the pump is connected inversely. If any test fails, again a recommended analysis to fix the installation will be shown. The complete procedure has to be repeated for every connected supply side pump.

As a result, information gathered from planning can be used to validate the actual installation by triggering certain actors of the HVAC system and monitoring the answer of the system by utilization of connected sensors.

In the above-mentioned embodiments according to the present invention, it is preferred that information collected and stored can be displayed to the technician or the customer through, for instance, the mobile device and/or the computing device. For instance, after the method step S22, it is preferred that the computing device presents a summary of the first parameter set comprising operation site parameters and the second parameter set comprising the HVAC configuration parameters before the method step S23 of generating the configuration file on the basis of the first and second parameter sets. Further, the configuration file generated for commissioning the HVAC system according to the present invention, the identity information comprised in the generated configuration file and the installation information comprised in the HVAC system, the first/second parameter sets, the test run data for validation of the HVAC system and the expected test result data, the validation analysis data and the user instructions can be preferably separately displayed on the computing device or the mobile device at each stage of the commissioning process or can be displayed simultaneously in a summary at the end of the design/planning stage, the commissioning stage or the commissioning stage with the validation of the commissioning process.

A computer program is provided in accordance with the present invention comprising instructions which cause the computing device to carry out the steps of the method of the present invention when the computing device is executing the instructions. The computer program can be in the form of a software installed on the computing device. Alternatively or additionally, the computing device can carry out the steps of the method of the present invention by accessing the central storage unit storing relevant instructions.

A computer program is also provided in accordance with the present invention comprising instructions which cause the mobile device to carry out the steps of the method of the present invention when the mobile device is executing the instructions. Again the computer program can be in the form of a software installed on the mobile device. Alternatively or additionally, the mobile device can carry out the steps of the method of the present invention by accessing the central storage unit storing relevant instructions.

## Claims

1. A method for configuring and commissioning an HVAC system, comprising:
generating, by a computing device, a configuration file for commissioning the HVAC system such that the HVAC system is brought into operation, wherein the configuration file is generated at a configuration site and the HVAC system is to be delivered to an operation site;
uploading, by the computing device, the generated configuration file to a central storage unit;
downloading, by a mobile device, the uploaded configuration file from the central storage unit;
transmitting, by the mobile device, the downloaded configuration file to an HVAC control unit comprised in the HVAC system located at the operation site; and
commissioning, by the HVAC control unit, the HVAC system located at the operation site with the transmitted configuration file.

2. The method of claim 1, further comprising:
displaying, by the mobile device, the configuration file downloaded from the central storage unit; and
before transmitting, by the mobile device, the downloaded configuration file to the HVAC control unit, obtaining, by the mobile device, a confirmation from a user at the operation site.

3. The method of claim 2, further comprising:
before obtaining, by the mobile device, the confirmation from the user, determining, by the mobile device, that a local connection at the operation site between the mobile device and the HVAC control unit is established.

4. The method of any of claims 1 to 3, further comprising:
providing, by the computing device, the configuration file with identity information including at least one of first HVAC object information, first user information and first HVAC service information of the HVAC system to be delivered to the operation site; and
before transmitting, by the mobile device, the downloaded configuration file to the HVAC control unit, checking, by the mobile device, whether the identity information comprised in the downloaded configuration file corresponds to installation information comprised in the HVAC system located at the operation site, wherein the installation information comprises at least one of second HVAC object information, second user information and second HVAC service information of the HVAC system located at the operation site.

5. The method of any of claims 1 to 4, further comprising:
storing, by the central storage unit, a first parameter set comprising a plurality of operation site parameters obtained from the operation site;
storing, by the central storage unit, a second parameter set comprising a plurality of HVAC configuration parameters of the HVAC system to be delivered to the operation site; and
generating, by the computing device, the configuration file for commissioning the HVAC system on the basis of the first parameter set and the second parameter set stored in the central storage unit.

6. The method of claim 5, further comprising:
storing, by the central storage unit, a plurality of previous first parameter sets,
wherein each set comprises a plurality of previous operation site parameters obtained from a corresponding previous operation site;
storing, by the central storage unit, a plurality of previous second parameter sets,
wherein each set comprises a plurality of previous HVAC configuration parameters of a corresponding previous HVAC system;
generating, by the computing device, a plurality of previous configuration files each associated with any one set comprised in the plurality of previous first parameter sets and any one set comprised in the plurality of previous second parameter sets;
matching, by the computing device, the stored first parameter set with a previous first parameter set comprised in the plurality of previous first parameter sets;
matching, by the computing device, the stored second parameter set with a previous second parameter set comprised in the plurality of previous second parameter sets; and
obtaining, by the computing device, the configuration file for commissioning the HVAC system on the basis of the plurality of previous configuration files.

7. The method of any of claims 1 to 6, further comprising:
providing, by the central storage unit, the uploaded configuration file with test run data for validation of the HVAC system and expected test result data associated with the test run data;
initiating, by the HVAC control unit, a test run on the HVAC system located at the operation site according to the test run data comprised in the configuration file transmitted from the mobile device; and
generating, by the HVAC control unit, validation analysis data on the basis of actual test result data obtained from the initiated test run and the expected test result data comprised in the configuration file transmitted from the mobile device.

8. The method of claim 7, further comprising:
transmitting, by the HVAC control unit, the obtained actual test result data to the central storage unit, wherein the obtained actual test result data is directly transmitted to the central storage unit and/or transmitted to the central storage unit via the mobile device; and
generating, by the central storage unit and/or by the mobile device, validation analysis data on the basis of the transmitted actual test result data and the expected test result data comprised in the configuration file.

9. The method of claim 7 or 8, further comprising:
receiving, by the mobile device, the generated validation analysis data from the HVAC control unit or the central storage unit;
generating, by the mobile device, user instructions on the basis of the transmitted validation analysis data; and
displaying, by the mobile device, the generated user instructions and/or the transmitted validation analysis data.

10. A method for configuring and commissioning an HVAC system, comprising:
storing, by a central storage unit, a first parameter set comprising a plurality of operation site parameters obtained from an operation site, wherein the HVAC system is to be delivered to the operation site;
storing, by the central storage unit, a second parameter set comprising a plurality of HVAC configuration parameters of the HVAC system;
generating, by a computing device, a configuration file for commissioning the HVAC system such that the HVAC system is brought into operation, wherein the configuration file is generated at a configuration site on the basis of the first parameter set and the second parameter set stored in the central storage unit; and
commissioning, by an HVAC control unit comprised in the HVAC system, the HVAC system located at the operation site with the transmitted configuration file.

11. The method of claim 10, further comprising:
storing, by the central storage unit, a plurality of previous first parameter sets,
wherein each set comprises a plurality of previous operation site parameters obtained from a corresponding previous operation site;
storing, by the central storage unit, a plurality of previous second parameter sets,
wherein each set comprises a plurality of previous HVAC configuration parameters of a corresponding previous HVAC system;
generating, by the computing device, a plurality of previous configuration files each associated with any one set comprised in the plurality of previous first parameter sets and any one set comprised in the plurality of previous second parameter sets;
matching, by the computing device, the stored first parameter set with a previous first parameter set comprised in the plurality of previous first parameter sets;
matching, by the computing device, the stored second parameter set with a previous second parameter set comprised in the plurality of previous second parameter sets; and
obtaining, by the computing device, the configuration file for commissioning the HVAC system on the basis of the plurality of previous configuration files.

12. A system for configuring and commissioning an HVAC system, comprising a computing device, a central storage unit, a mobile device and the HVAC system, wherein:
the computing device is configured to generate a configuration file for commissioning the HVAC system such that the HVAC system is brought into operation, wherein the configuration file is generated at a configuration site and the HVAC system is to be delivered to an operation site;
the computing device is further configured to upload the generated configuration file to the central storage unit;
the mobile device is configured to download the uploaded configuration file from the central storage unit, and to transmit the downloaded configuration file to an HVAC control unit comprised in the HVAC system located at the operation site; and
the HVAC control unit is configured to commission the HVAC system located at the operation site with the transmitted configuration file.

13. A system for configuring and commissioning an HVAC system, comprising a computing device, a central storage unit, a mobile device and the HVAC system, wherein:
the central storage unit is configured to store a first parameter set comprising a plurality of operation site parameters obtained from an operation site, wherein the HVAC system is to be delivered to the operation site;
the central storage unit is further configured to store a second parameter set comprising a plurality of HVAC configuration parameters of the HVAC system;
the computing device is configured to generate a configuration file for commissioning the HVAC system such that the HVAC system is brought into operation, wherein the configuration file is generated at a configuration site on the basis of the first parameter set and the second parameter set stored in the central storage unit; and
an HVAC control unit comprised in the HVAC system is configured to commission the HVAC system located at the operation site with the transmitted configuration file.

14. A computer program comprising instructions which, when being executed by a computing device, cause the computing device to carry out the steps of the method of claims 1 to 11.

15. A computer program comprising instructions which, when being executed by a mobile device, cause the mobile device to carry out the steps of the method of claims 1 to 11.
